# EUROPEAN PATENT APPLICATION

(11) **EP 4 389 849 A1**
(43) Date of publication of application: **26.06.2024**
(21) Application number: 22306964.2
(22) Date of filing: 21.12.2022
(51) Int. Cl.: C09K 5/04, C09K 5/10, H01M 10/613

(54) **USE OF HYDROFLUOROETHERS IN HEAT TRANSFER APPLICATIONS**

(71) Applicant: ARKEMA FRANCE, 92700 Colombes (FR)
(72) Inventor: WENDLINGER, Laurent, 69491 Pierre-Benite (FR); GARRAIT, Dominique, 69491 Pierre-Benite (FR)
(74) Representative: Arkema Patent

(57) **Abstract**

The invention relates to the use of a hydrofluoroether of formula (I): (R₁)(R₂)CHO-CHF-CF₂-R₃ for transferring heat to or from an energy dissipating body, wherein: R₁, R₂ are each independently H, F, CₘFₙH₍₂ₘ₊₁₋ₙ₎; R₃ is F, CₘFₙH₍₂ₘ₊₁₋ₙ₎; and each m = 1 to 4 and each n = 0 to 9. The invention also relates to an immersion cooling system and a thermal management system in which the hydrofluoroether of formula (I) as described above is used.

## Description

### TECHNICAL FIELD

The present invention relates to the use of a hydrofluoroether for transferring heat to or from an energy dissipating body, as well as to a thermal management system and an immersion cooling system wherein said hydrofluoroether is used.

### TECHNICAL BACKGROUND

Hydrofluoroethers have been found to be useful replacements for chlorofluorocarbons (CFCs) and hydrofluorocarbons (HFCs), the use of which is disfavored and regulated due to their possible adverse effects on the environment, especially on the ozone layer.

As non-ozone-depleting chemicals, hydrofluoroethers are useful in a wide range of applications, such as solvent and carrier (e.g., cleaning solvent) applications, fire protection, flammability suppression, and blowing agent.

Various hydrofluoroethers and their uses have been previously described.

For example, document US5273592 describes solvents useful for dissolving contaminants or removing contaminants from the surface of a substrate. The solvents have the formula RO-CH(A)(B) wherein R is a hydrocarbon having 1 to 3 carbon atoms and A and B are the same or different and partially fluorinated or perfluorinated alkyl groups having 1 to 2 carbon atoms.

Document WO96/40834 discloses compositions comprising a hydrofluoroether or fluoroether of the formula CₐF_{b}H_{2a+2-b}O_{c} wherein a is 3 to 6, b is 1 to 14 and c = 1 or 2. Said compositions are useful as refrigerants, cleaning agents, aerosol propellants, heat transfer media, gaseous dielectrics, fire extinguishing agents, expansion agents for polymers such as polyolefins and polyurethanes, and as power cycle working fluids.

Document JP2021059501A relates to hydrofluoroethers of the formula (F₃C)₂CH-O-CHₙF₂₋ₙ-CHₘF₃₋ₘ wherein n is 1 or 2, and m is any integer of 0 to 3 when n is 1 and m is 0 or 2 when n is 2. These high dissolving power hydrofluoroethers are capable of dissolving a variety of solutes. They are also useful for efficiently forming coating films on the surfaces of various articles, and for removing substances adhering to the surfaces of articles.

Some hydrofluoroethers have also attracted attention as fluids to transfer heat and/or manage the temperature of devices, especially electronic devices. These devices are added with functionality resulting in increased thermal power density of the device, while its miniaturization is desired. Thus, cooling of such devices is challenging.

Document WO2022/150414 relates to fluorine-substituted unsymmetrical ethers, to compositions containing the same, and to methods and uses of these compounds and compositions in numerous applications such as heat transfer of electronic devices. These fluorine-substituted unsymmetrical ethers have the formula (R₁)(R₂)CH-O-CH₂-R₃, wherein R₁, R₂ and R₃ are each independently CₓR'_{(2x+1)-y}H_{y}, each R' is independently selected from For Cl and wherein the value of (2x+1)-y is the total number of R' substituents on the indicated carbon atom(s); each x is independently equal to or greater than 1 and equal to or less than 6; and y is equal to or greater than 0 and less than or equal to 2x+1.

Document WO2021/144678A1 discloses a compound having structural formula (II): (R₂f)(R₂f')(R₂f")C-COH₂R₂ where R₂ is H, CH₃, CF₃, CH₂CF₂CF₂H, or CH₂CF₂CF₂CF₂CF₂H; R₂f is a perfluoroalkyl group having 1-4 carbon atoms; R₂f' is CF₃ or CF₂CF₃; and R₂f" is CF₃ or CF₂CF₃; with the proviso that when R₂f' is CF₃, then R₂f" is CF₃, and when R₂ is H or CH₃, then R₂f is not CF₃. The compound can be used in various applications such as heat transfer agents for various devices.

However, there exists a continuous need for improved means for transferring heat to/from and/or managing the temperature of energy dissipating bodies, in an environment-friendly manner.

### SUMMARY OF THE INVENTION

It is a first object of the invention to provide the use of a hydrofluoroether of formula (I):

(R₁)(R₂)CH-O-CHF-CF₂-R₃ (I)

for transferring heat to or from an energy dissipating body, wherein:
- R₁, R₂ are each independently H, F, CₘFₙH₍₂ₘ₊₁₋ₙ₎;
- R₃ is F, CₘFₙH₍₂ₘ₊₁₋ₙ₎; and
- each m = 1 to 4 and each n = 0 to 9.

In some embodiments, the energy dissipating body is an electronic or electric device selected from a microprocessor, a semiconductor wafer used to manufacture a semiconductor device, a power control semiconductor, an electrochemical cell, a battery pack, an electrical distribution switch gear, a power transformer, a circuit board, a multi-chip module, a packaged or unpackaged semiconductor device, a central processing unit (CPU), Graphic Processing Unit (GPU), a fuel cell, a busbar, a computer, a computer server, a cell phone, a smartphone, a digital home appliance such as a television, media player or game console, an electrical drive motor, and a laser; or an electrochemical cell pack, such as a battery pack, particularly a lithium-ion battery pack; and wherein preferably the energy dissipating body is a computer or computer server.

In some embodiments, the transfer of heat is carried out by immersion cooling, such as single phase immersion cooling or two-phase immersion cooling.

In some embodiments, R₃ of formula (I) is F, CF₃ or CF₂-CF₃.

In some embodiments, R₁ and R₂ are each independently H or CF₃.

In some embodiments, the hydrofluoroether is 1,1,1,3,3,3-hexafluoro-2-(1,2,2,2-tetrafluoroethoxy)propane ((CF₃)₂-CH-O-CHF-CF₃) or 1,1,1,2,2,3-hexafluoro-3-(2,2,2-trifluoroethoxy)propane(CF₃-CH2-O-CHF-CF₂-CF₃).

It is a second object of the invention to provide an immersion cooling system comprising:
- a housing having an interior space;
- an energy dissipating body disposed within the interior space; and
- a working fluid liquid disposed within the interior space such that the energy dissipating body is in direct contact with the working fluid liquid;
wherein the working fluid comprises the hydrofluoroether of formula (I) as described above.

In some embodiments, the immersion cooling system is a single phase immersion cooling system or a two-phase immersion cooling system.

In some embodiments, the energy dissipating body of the immersion cooling system comprises or is an electronic or electric device.

In some embodiments, the working fluid of the immersion cooling system comprises at least 25%, at least 50%, at least 70%, at least 80%, at least 90%, at least 95%, or at least 99% by weight of the hydrofluoroether of formula (I), based on the total weight of the working fluid.

In some embodiments, the working fluid of the immersion cooling system essentially consists of the hydrofluoroether of formula (I).

It is a third object of the invention to provide a thermal management system for an energy dissipating body comprising:
- an energy dissipating body; and
- a working fluid in thermal communication with the electrochemical cell pack;
wherein the working fluid comprises the hydrofluoroether of formula (I) as described above.

In some embodiments, the energy dissipating body of the thermal management system is a battery pack, particularly a lithium-ion battery pack; or an electronic or electric device.

In some embodiments, the working fluid of the thermal management system comprises at least 25%, at least 50%, at least 70%, at least 80%, at least 90%, at least 95%, or at least 99% by weight of the hydrofluoroether of formula (I), based on the total weight of the working fluid.

In some embodiments, the working fluid of the thermal management system essentially consists of the hydrofluoroether of formula (I).

The present invention makes it possible to overcome the drawbacks of the prior art. In particular, the present invention makes it possible to efficiently transfer heat to or from an energy dissipating body in an environmentally-friendly manner.

The hydrofluoroethers of formula (I) do not contain chlorine atoms, bromine atoms or any other atoms that can destroy ozone molecules depletion and thus cannot contribute to the overall ozone depletion.

In addition, the hydrofluoroethers of formula (I), which contain a plurality of hydrogen atoms, have a relatively high reactivity with OH radicals in the atmosphere. Thus, the hydrofluoroethers of formula (I) have a short atmospheric lifetime, and thus do not cause much influence on global warming.

### DESCRIPTION OF EMBODIMENTS

The invention will now be described in more detail without limitation in the following description.

By "*hydrofluoroether*" is meant an ether having partial substitution of hydrogen atoms by fluorine atoms.

By "*energy dissipating body*" is meant any material, component, device or body in which some energy is lost to the environment (energy is transferred externally, e.g., outside the material). The energy can be heat or chemical energy.

By "*direct contact*" is meant that two materials physically touch with each other (have a contact interface).

By "*thermal communication*" is meant that two materials are positioned such that heat can be transferred from one to the other based on their properties and positions. The two materials may be in thermal communication directly (i.e., two materials are in direct contact with each other) or indirectly (i.e. the two materials may exchange heat through another, intermediate material, such as walls of tube(s) or plate(s) for the circulation of the working fluid).

By "*thermal management system for an electrochemical cell pack*" is meant a system that maximizes the cycle life of electrochemical cells within the electrochemical cell pack and/or maintains a relatively uniform temperature of the cells within the pack.

By "*electrochemical cell pack*" is meant one or more individual electrochemical cells (which also may be called "battery" or "battery cell") that are electrically interconnected to achieve a desired voltage and capacity for a particular application.

By "*immersion cooling*" is meant that an energy dissipating body/bodies is/are submerged in a liquid for thermal management, especially via cooling (heat removal). The liquid for immersion cooling preferably has thermally conductive but electrically insulating properties.

By "*two-phase immersion cooling*" is meant that, when an energy dissipating body is submerged in a liquid in a housing, heat is absorbed in the process of vaporizing the liquid to a gas (i.e., the heat of vaporization).

By "*single phase immersion cooling*" is meant that, when an energy dissipating body is submerged in a liquid in a housing, the liquid warms and cools as it flows or is pumped through the energy dissipating body and the housing, respectively (i.e., there is no phase change), thereby transferring heat away from the energy dissipating body.

### Hydrofluoroether of formula (I)

The invention relates to the use of a hydrofluoroether of formula (I) for transferring heat to or from an energy dissipating body, the formula represented by :

(R₁)(R₂)CH-O-CHF-CF₂-R₃ (I).

In the formula (I), R₁, R₂ are each independently H, F, CₘFₙH₍₂ₘ₊₁₋ₙ₎; R₃ is F, CₘFₙH₍₂ₘ₊₁₋ₙ₎; and each m = 1 to 4 and each n = 0 to 9.

The group CₘFₙH₍₂ₘ₊₁₋ₙ₎ may be a straight chain alkyl group or branched chain alkyl group, and the alky group may be substituted or unsubstituted.

In some embodiments, R₃ of formula (I) may be F or CF₃.

In some embodiments, R₁ and R₂ of formula (I) are each independently H or CF₃; and R₃ of formula (I) may be F or CF₃.

In preferred embodiments, the hydrofluoroether of formula (I) is 1,1,1,3,3,3-hexafluoro-2-(1,2,2,2-tetrafluoroethoxy)propane ((CF₃)₂-CH-O-CHF-CF₃) or 1,1,1,2,2,3-hexafluoro-3-(2,2,2-trifluoroethoxy)propane (CF₃-CH₂-O-CHF-CF₂-CF₃).

The hydrofluoroether of formula (I) and its degradation products may have an acceptable global warming potential (GWP, 100yr ITH) and ozone depletion potential (ODP), for example, a GWP of less than 2000, 1000, 800, 600, 500, 400, 300, 200, 100, or 10, and an ODP of less than 0.01 or zero, respectively. As used herein, GWP is a relative measure of the global warming potential of a compound based on the structure of the compound. The GWP of a compound, as defined by the Intergovernmental Panel on Climate Change (IPCC) in 1990 and updated in 2007, is calculated as the warming due to the release of 1 kg of a compound relative to the warming due to the release of 1 kg of CO₂ over a specified integration time horizon (ITH).

### Use of the hydrofluoroether of formula (I)

As described above, the present invention relates to the use of a hydrofluoroether of formula (I) for transferring heat to or from an energy dissipating body.

The transfer of heat may include maintaining, increasing, or decreasing the temperature of the energy dissipating body (i.e., heat may be transferred to or from the energy dissipating body via the hydrofluoroether), such as the temperature control in the manufacture of electronic equipment, thermal management of operating electronic devices and power systems, and avionic and military cooling.

The transfer of heat may be carried out by immersion cooling, such as single phase immersion cooling or two-phase immersion cooling.

The energy dissipating body may be an electronic or electric device, or an electrochemical cell pack.

An electronic or electric device may be made of an electronic or electric component (performing a basic electronic or electric function) or an apparatus comprising a number of interconnected electronic or electric components able to carry out complex functions, and in particular able to carry out computing functions.

The electronic or electric device may be selected from a microprocessor, a semiconductor wafer used to manufacture a semiconductor device, a power control semiconductor, an electrical distribution switch gear, a power transformer, a circuit board, a multi-chip module, a packaged or unpackaged semiconductor device, a central processing unit (CPU), Graphic Processing Unit (GPU), a fuel cell, a busbar, a computer, a computer server, a cell phone, a smartphone, a digital home appliance (e.g., televisions, media players, game consoles), an electrical drive motor, a laser, a computing component including a processor and a memory device, and an electronic or electrical component such as a wire, a capacitor, an inductor, a resistor, a diode, a light emitting diode (LED), an electroluminescent element, a transistor, an antenna, a battery, a switch, an integrated circuit, a chip, an electrode, and a heat sink.

The electrochemical cell pack may be a battery pack, particularly a lithium-ion battery pack.

The hydrofluoroether of formula (I) may be used for cooling data center(s). By "data center" is meant a facility used to house computer systems and associated components (i.e., resources of the data center), such as computer servers for different applications as mining, edge computing, high performance computing, artificial intelligence, cloud computing.

The energy dissipating body is preferably a lithium-ion battery pack, computer, or a computer server.

The energy dissipating body may be coupled to another one or more electronic or electric device(s).

In some embodiments, the hydrofluoroether of formula (I) may be in direct contact with the energy dissipating body.

The hydrofluoroether of formula (I) may be also used in other applications, for example, electrolyte solvent for batteries (particularly lithium ion batteries), electrical insulation, electronics testing, and etching fluids.

A single hydrofluoroether of formula (I) may be used for the above applications; alternatively, two or more hydrofluoroethers of formula (I) may be used in combination.

### Immersion cooling system

The present invention further relates to an immersion cooling system.

The immersion cooling system comprises a housing having an interior space; an energy dissipating body disposed within the interior space; and a working fluid liquid disposed within the interior space such that the energy dissipating body is in direct contact with the working fluid liquid.

The working fluid comprises the hydrofluoroether of formula (I) as described above.

The immersion cooling system may perform single phase immersion cooling or two-phase immersion cooling.

In the immersion cooling system, the working fluid in a liquid phase may be disposed within a lower volume of the interior space of the housing. The working fluid may have an upper liquid surface. The interior space may also include an upper volume extending from the liquid surface up to an upper portion of the housing.

The energy dissipating body may be disposed within the interior space such that it is at least partially immersed (and up to fully immersed) in the working fluid liquid.

The energy dissipating body may comprise or may be a heat generating component, particularly an electronic or electric device.

The energy dissipating body may be coupled to another one or more electronic or electric device(s). The energy dissipating body may comprise or may be two or more electronic or electric devices.

Examples of the electronic or electric devices are as described above.

The energy dissipating body may comprise a computer server.

The working fluid of the immersion cooling system may comprise at least 25%, at least 50%, at least 70%, at least 80%, at least 90%, at least 95%, or at least 99% by weight of the hydrofluoroether of formula (I), based on the total weight of the working fluid.

The working fluid of the immersion cooling system may comprise two or more hydrofluoroethers of formula (I). In this case, the content by weight of the hydrofluoroether of formula (I) indicated above refers to the total weight of the hydrofluoroethers of formula (I).

In some embodiments, in addition to the hydrofluoroether of formula (I), the working fluid of the immersion cooling system may comprise a total of up to 75%, up to 50%, up to 30%, up to 20%, up to 10%, or up to 5% by weight of one or more of the following components: alcohols, ethers, alkanes, perfluoroalkenes, alkenes, haloalkenes, perfluorocarbons, perfluorinated tertiary amines, perfluoroethers, cycloalkanes, esters, perfluoroketones, ketones, oxiranes, aromatics, siloxanes, hydrofluorocarbons, hydrochlorocarbons, hydrochlorofluorocarbons, hydrofluoroolefins, hydrochloroolefins, hydrochlorofluoroolefins, sulfones, other hydrofluoroethers, or mixtures thereof, based on the total weight of the working fluid.

Such additional components can be chosen to modify or enhance the properties of the working fluid for a particular use.

The working fluid of the immersion cooling system may essentially consist of the hydrofluoroether of formula (I).

The working fluid of the immersion cooling system may be stable such that it does not react with common contaminants such as water or with reagents such as activated carbon or alumina that might be used to scrub the fluid during operation.

The boiling temperature of the working fluid during operation may be in a range of from 20°C to 85°C, for example. Generally, this range accommodates maintaining the energy dissipating body, especially server(s), at a sufficiently cool temperature while allowing heat to be dissipated efficiently to an ultimate heat sink (e.g., outside air).

Specifically, in some embodiments, the working fluid may have a boiling temperature of from 30 to 75°C, from 35 to 75 °C, from 40 to 75 °C, or from 45 to 75°C. In some embodiments, the working fluid may have a boiling temperature of greater than 40°C, greater than 50°C or greater than 60 °C, greater than 70 °C, or in some cases greater than 75°C.

In some embodiments, the working fluid of the immersion cooling system may have a dielectric constant of less than 5, less than 2.4, less than 2.3, less than 2.2, less than 2.1, less than 2.0, or less than 1.9, as measured in accordance with ASTM DI50 at room temperature.

When the dielectric constant is within the above range, the immersion cooling system may be particularly suitable for the immersion cooling of high performance computer server hardware or devices that operate at high frequencies.

The working fluid of the immersion cooling system may have acceptable global warming potential and ozone depletion potential, as described above.

In some embodiments, especially in the case of two-phase immersion cooling, the immersion cooling system may further comprise a heat exchanger (e.g., a condenser). The heat exchanger may be disposed within the upper volume of the interior space. Generally, the heat exchanger may be configured to be able to condense a vapor phase of the working fluid that is generated as a result of the heat that is produced by the heat-generating element.

For example, the heat exchanger may have an external surface that is maintained at a temperature that is lower than the condensation temperature of a vapor phase of the working fluid. In this regard, as a rising vapor phase comes into contact with the heat exchanger, the rising vapor phase may be condensed back to a liquid phase or condensate by releasing latent heat to the heat exchanger. The resulting condensate may then be returned to the liquid phase disposed in the lower volume.

During a steady state operation of the two-phase immersion cooling system, the upper volume of the interior space of the housing may include a vapor phase of the working liquid and a headspace phase including a mixture of non-condensable gas (e.g., air), water vapor and the working fluid vapor, which is disposed above the vapor phase. The headspace phase may be occasionally vented.

In contrast to air cooling (e.g., fan-based) or oil cooling, the immersion cooling system of the present invention requires less energy and is environmentally friendly.

The immersion cooling system of the present invention may be useful for cooling data center(s), as explained above.

For example, computer servers may be submerged in the working fluid liquid, thereby allowing data centers to operate servers without a raised floor, computer room air conditioning (CRAC) units or chillers, lowering the environmental impact and costs.

While the examples of suitable two-phase and single phase immersion cooling systems have been described above, it is to be appreciated that the benefits and advantages of the working fluid comprising the hydrofluoroether of formula (I) as described above may be realized in any known two-phase or single phase immersion cooling system.

A method for immersion cooling may comprise at least partially immersing an energy dissipating body in the working fluid liquid as described above; and transferring heat from the energy dissipating body using working fluid liquid.

### A thermal management system for an energy dissipating body

The present invention also relates to a thermal management system for an energy dissipating body.

The thermal management system comprises an energy dissipating body, and a working fluid in thermal communication with the electrochemical cell pack.

The energy dissipating body may be as described above. In particular, the energy dissipating body may be an electronic or electric device, as defined above.

In other embodiments, the energy dissipating body may be an electrochemical cell pack.

The energy dissipating body may be coupled to another one or more electronic or electric device(s).

One or more additional component(s) such as tube(s) or plate(s) in which the working fluid circulates, may exist between the energy dissipating body and the working fluid. Examples of the tubes and plates may include heat pipes and cold plates. Alternatively, the energy dissipating body may be in direct contact with the working fluid.

The working fluid of the thermal management system comprises the hydrofluoroether of formula (I) as described above.

The thermal management system for an energy dissipating body of the invention may maintain a relatively uniform temperature of the energy dissipating body, for example, in the case of the electrochemical cell pack, a relatively uniform temperature of the cells within the pack.

In the case of the electrochemical cell pack, when the electrochemical cell pack contains two or more cells, gaps between adjacent cells may form a fluid channel, and the working fluid may be in thermal communication, directly or indirectly, with each cell through the respective fluid channel.

High temperatures can increase the capacity fade rate and impedance of the electrochemical cells (e.g., lithium-ion batteries) while decreasing their lifespan. Ideally, in the thermal management system of the present invention, each individual cell within a battery pack may be maintained at a substantially constant temperature (e.g., from -40° C to 60°C, or from -10° C to 40°C, or from 10° C to 30°C, or from 20° C to 30°C at standard pressure).

Still in the case of the electrochemical cells, the working fluid may be used to maintain a desirable operational temperature range as described above. However, in the event of mechanical damage or an internal short of any of the cells, the working fluid may also prevent propagation or cascading of a thermal runaway event to adjacent cells in the pack via evaporative cooling, thus significantly mitigating the risk of a catastrophic thermal runaway event involving multiple cells.

In some embodiments, the electrochemical cell pack may be a battery pack, particularly a lithium-ion battery pack.

The working fluid may comprise at least 25%, at least 50%, at least 70%, at least 80%, at least 90%, at least 95%, or at least 99% by weight of the hydrofluoroether of formula (I), based on the total weight of the working fluid.

In some embodiments, the working fluid of the thermal management system may comprise two or more hydrofluoroethers of formula (I). In this case, the content by weight of the hydrofluoroether of formula (I) indicated above refers to the total weight of the two or more hydrofluoroethers of formula (I).

In some embodiments, in addition to the hydrofluoroether(s) of formula (I), the working fluid of the thermal management system may comprise an additional component. The examples and the total amount of such an additional component may be as described above.

In other embodiments, the working fluid of the thermal management system essentially consists of the hydrofluoroether(s) of formula (I).

The working fluid of the thermal management system and its degradation products may have acceptable global warming potential (GWP, 100yr ITH) and ozone depletion potential (ODP), for example, a GWP of less than 2000, 1000, 800, 600, 500, 400, 300, 200, 100 or 10, and an ODP of less than 0.01, or zero respectively.

A method for thermal management of an energy dissipating body may comprise providing the working fluid as described above; disposing the energy dissipating body in thermal communication with the working fluid; and transferring heat from the energy dissipating body using the working fluid.

### Method for preparing a hydrofluoroether of formula (I)

The hydrofluoroether of formula (I) may be prepared by:
- reacting an aldehyde of formula (II): R₃-CF₂-CHO with hydrogen fluoride to form an intermediate, and
- reacting the resulting intermediate with an alcohol of formula (III): (R₁)(R₂)CH-OH to form the hydrofluoroether.

In some embodiments, the aldehyde of formula (II) may be trifluoroacetaldehyde (R₃ = F) or 2,2,3,3,3-pentafluoropropanal (R₃ = CF₃) or 2,2,3,3,4,4,4-heptafluorobutanal (R₃ = CF₃-CF₂).

The aldehyde is preferably trifluoracetaldehyde or pentafluoropropionalde hyde.

The aldehyde may be provided in any of its known forms. Thus, trifluoroacetaldehyde may be provided, for example, in its hydrated form CF₃-CH(OH)₂ or in its dehydrated form CF₃-CHO.

In the method for preparing the hydrofluoroether of formula (I) (hereinafter referred to as "preparation method"), the molar ratio of the aldehyde of formula R₃-CF₂-CHO to hydrogen fluoride may vary considerably, for example in the range of from 1:0.5 to 1:50.

In general, a stoichiometric excess of hydrogen fluoride with respect to the aldehyde is preferred. Typically, the molar ratio of the aldehyde to the hydrogen fluoride may be from 1:0.5 to 1:50, preferably from 1:2 to 1:30, and more preferably from 1:2 to 1:10.

The hydrogen fluoride may be also provided in a gaseous phase. The gaseous hydrogen fluoride may be introduced to a reaction system through a condenser, which condenses the gaseous hydrogen fluoride.

In the preparation method, the alcohol of formula (III) may notably be methanol (R₁=R₂=H), ethanol (R₁=CH3, R₂=H), 2-monofluoroethanol (R₁=CH₂F, R₂=H), 2,2-difluoroethanol (R₁=CHF2, R₂=H), 2,2,2-trifluoroethanol (R₁=CF₃, R₂=H), hexafluoroisopropanol (R₁=R₂=CF₃), 2,2-difluoropropanol (R₁=CH3-CF₂, R₂=H), 1,1,1-trifluoro-2-propanol (R₁=CF₃, R₂=CH3), 3,3,3-trifluoro-1-propanol (R₁=CF₃-CH₂, R₂=H), 2,2,3,3-tetrafluoro-1-propanol (R₁=CHF2-CF₂, R₂=H), pentafluoro-1-propanol (R₁=CF₃-CF₂, R₂=H), 4,4,4-trifluoro-1-butanol (CF₃-CH₂-CH₂, R₂=H), 3,3,4,4-tetrafluorobutan-2-ol (R₁=CHF2-CF₂, R₂=CH3), 3,3,4,4,4-pentafluoro-1-butanol (R₁=CF₃-CF₂-CH₂, R₂=H), 3,3,4,4,4-pentafluoro-2-butanol (R₁=CF₃-CF₂, R₂=CH3), 2,2,3,4,4,4-hexafluorobutan-1-ol (R₁=CF₃-CHF-CF₂, R₂=H), 2,2,3,3,4,4,4-heptafluoro-1-butanol (R₁=CF₃-CF₂-CF₂, R₂=H) or 1,1,1,3,3,4,4,4-octafluoro-2-butanol (R₁=CF₃-CF₂, R₂=CF₃).

The alcohol is preferably trifluoroethanol or hexafluoroisopropanol.

When the alcohol is added separately, the alcohol may be added in similar proportions as the aldehyde of formula (II), that is, in the molar ratio of alcohol to hydrogen fluoride in the range of from 1:0.5 to 1:50, preferably from 1:2 to 1:30, and more preferably from 1:2 to 1:10.

In general, a stoichiometric excess of hydrogen fluoride with respect to the alcohol is preferred.

The intermediate obtained by reacting the aldehyde of formula (II) with hydrogen fluoride may be reacted with the alcohol in a number of ways.

It is to be understood that the intermediate derived from the aldehyde of formula (II) and hydrogen fluoride itself may be a hydrofluoroether and that incomplete reaction of such an intermediate with the alcohol may therefore result in a mixture of hydrofluoroethers.

In some embodiments, the aldehyde of formula (II) may be reacted with hydrogen fluoride in the presence of an alcohol of formula (III). In this case, the alcohol may be generated in situ.

For example, the reaction of trifluoroacetaldehyde with hydrogen fluoride is believed to yield an alcohol CF₃CHFOH which may then condense to give the hydrofluoroether CF₃CFH-O-CFHCF₃.

Alternatively, the aldehyde and the hydrogen fluoride may be reacted to form an equilibrium mixture containing the intermediate, and the alcohol may be added to the equilibrium mixture. In this case, the intermediate may be separated from the equilibrium mixture before it is reacted with the alcohol.

A wide range of hydrofluoroethers of formula (I) may be produced by adding a separate alcohol of formula (III).

When the alcohol of formula (III) is separately added, the alcohol may be added at the same time as the hydrogen fluoride and the aldehyde of (II), or the alcohol may be added subsequently to the mixture of aldehyde and hydrogen fluoride.

Alternatively, the alcohol may be first added to the hydrogen fluoride, and the aldehyde may then be added to this reaction mixture.

Thus, the order of addition of the hydrogen fluoride, aldehyde and alcohol is not critical.

After the reaction, the hydrofluoroether may be washed, for example, by adding alkali to the mixture or by contacting the product with water, dried and purified by standard procedures known to those skilled in the art.

The preparation method may be performed in a reactor comprising a reactor body having a stirrer. The stirrer is rotated at a sufficient speed to promote a good mixing of the reaction mixture of the preparation method.

Due to the corrosive nature of the reaction mixture, the reactor, the stirrer and its associated feed lines, effluent lines, and associated units should be made of materials resistant to hydrogen fluoride and hydrogen fluoride/water mixtures.

Typical such materials include high nickel content alloys, such as Monel^{®} nickel-copper alloys, Hastelloy^{®} nickel-based alloys and, Inconel^{®} nickel-chromium alloys. In another embodiment, the reactor, the stirrer and its associated feed lines, effluent lines, and associated units are lined with a fluoropolymer such as PFA (perfluoroalkoxy polymer) or PTFE (polytetrafluoroethylene polymer).

### EXAMPLES

The following examples illustrate the invention without limiting it.

### Example 1

### Preparation of 1,1,1,3,3,3-hexafluoro-2-(1,2,2,2-tetrafluoroethoxy)propane / (CF₃)₂-CH-O-CHF-CF₃ (R₁=CF₃, R₂=CF₃, R₃=F).

The reaction was carried out in a 1-liter, magnetically stirred, Hastelloy C276 autoclave.

The reactor was equipped with a top condenser, a cooling/heating jacket, a pressure gauge, a safety valve and a measuring unit (monitoring of the pressure and temperature).

The temperature of the condenser was controlled using an independent temperature controlled bath.

First, 250 g of anhydrous hydrogen fluoride (HF) was added with stirring and cooling (T = 0-5°C) to 0.5 mole of trifluoracetaldehyde monohydrate (-75% in H₂O) and to this mixture was added 0.4 mole of hexafluoroisopropanol.

After stirring for 1 hour, the mixture was allowed to reach room temperature.

After overnight stirring, the resulting products were sampled and analyzed by gas chromatography / mass spectrometry and gas chromatography.

The composition of the resulting products was determined as shown in Table 1:

**Table 1: Composition of the resulting products**

| | |
|---|---|
| (CF₃)₂-CH-O-CHF-CF₃ | 53.6 (area %) |
| CF₃-CHF-O-CHF-CF₃ | 11.5 (area %) |
| Others (including unreacted starting materials) | 31.6 (area %) |
| Unknowns | 3.3 (area%) |

### Example 2

### Preparation of 1,1,1,2,2,3-hexafluoro-3-(2,2,2-trifluoroethoxy)propane / CF₃-CH₂-O-CHF-CF₂-CF₃ (R₁=CF₃, R₂=H, R₃=CF₃)

The reaction was carried out in a 200 ml PFA reactor with a PFA coated thermocouple and a PTFE coated magnetic stir bar.

The reactor, immersed in a heating/cooling bath, was connected to a condenser consisting of a vertical PTFE tube. The outside of the condenser tube was jacketed with a vessel holding a cooling mixture.

The reactor was charged with 0.2 mole of pentafluoropropionaldehyde hydrate (tech. 90%) and 0.25 mole of trifluoroethanol.

An inlet port to the reactor provided means to feed gaseous HF into the system, which would condense in the condenser and drip into the reactor.

First, 10 g of gaseous anhydrous HF was added, with stirring and cooling (T = 0-5°C).

After stirring for 5 hours, the mixture was allowed to reach room temperature.

The condenser was heated to room temperature and refluxing stopped while excess HF was vented to an alkaline scrubber.

After overnight stirring, the resulting products were sampled and analyzed by gas chromatography/ mass spectrometry and gas chromatography.

The composition of the resulting products was determined as shown in Table 2:

**Table 2: Composition of the resulting products**

| | |
|---|---|
| CF₃-CH₂-O-CHF-CF₂-CF₃ | 38.4(area %) |
| CF₃-CF₂-CHF-O-CHF-CF₂-CF₃ | 6.8 (area %) |
| Others (including unreacted starting materials) | 49.6 (area %) |
| Unknowns | 5.2 (area%) |

## Claims

1. The use of a hydrofluoroether of formula (I):
(R₁)(R₂)CH-O-CHF-CF₂-R₃ (I)
for transferring heat to or from an energy dissipating body, wherein:
- R₁, R₂ are each independently H, F, CₘFₙH₍₂ₘ₊₁₋ₙ₎;
- R₃ is F, CₘFₙH₍₂ₘ₊₁₋ₙ₎; and
- each m = 1 to 4 and each n = 0 to 9.

2. The use according to claim 1, wherein the energy dissipating body is an electronic or electric device selected from a microprocessor, a semiconductor wafer used to manufacture a semiconductor device, a power control semiconductor, an electrochemical cell, a battery pack, an electrical distribution switch gear, a power transformer, a circuit board, a multi-chip module, a packaged or unpackaged semiconductor device, a central processing unit (CPU), Graphic Processing Unit (GPU), a fuel cell, a busbar, a computer, a computer server, a cell phone, a smartphone, a digital home appliance such as a television, media player or game console, an electrical drive motor, and a laser; or an electrochemical cell pack, such as a battery pack, particularly a lithium-ion battery pack; and wherein preferably the energy dissipating body is a computer or computer server.

3. The use according to claim 1 or 2, wherein the transfer of heat is carried out by immersion cooling, such as single phase immersion cooling or two-phase immersion cooling.

4. The use according to any one of claims 1 to 3, wherein
- R₃ is F, CF₃ or CF₂-CF₃.

5. The use according to any one of claims 1 to 4, wherein
- R₁ and R₂ are each independently H or CF₃.

6. The use according to any one of claims 1 to 5, wherein the hydrofluoroether is 1,1,1,3,3,3-hexafluoro-2-(1,2,2,2-tetrafluoroethoxy)propane ((CF₃)₂-CH-O-CHF-CF₃) or 1,1,1,2,2,3-hexafluoro-3-(2,2,2-trifluoroethoxy)propane (CF₃-CH₂-O-CHF-CF₂-CF₃).

7. An immersion cooling system comprising:
- a housing having an interior space;
- an energy dissipating body disposed within the interior space; and
- a working fluid liquid disposed within the interior space such that the energy dissipating body is in direct contact with the working fluid liquid;
wherein the working fluid comprises the hydrofluoroether of formula (I) as described in any one claims 1 to 6.

8. The immersion cooling system of claim 7, wherein the immersion cooling system is a single phase immersion cooling system or a two-phase immersion cooling system.

9. The immersion cooling system of claim 7 or 8, wherein the energy dissipating body comprises or is an electronic or electric device.

10. The immersion cooling system of any one of claims 7 to 9, wherein the working fluid comprises at least 25%, at least 50%, at least 70%, at least 80%, at least 90%, at least 95%, or at least 99% by weight of the hydrofluoroether of formula (I), based on the total weight of the working fluid.

11. The immersion cooling system of any one of claims 7 to 10, wherein the working fluid essentially consists of the hydrofluoroether of formula (I).

12. A thermal management system for an energy dissipating body comprising:
- an energy dissipating body; and
- a working fluid in thermal communication with the electrochemical cell pack;
wherein the working fluid comprises the hydrofluoroether of formula (I) as described in any one claims 1 to 6.

13. The thermal management system of claim 12, wherein the energy dissipating body is a battery pack, particularly a lithium-ion battery pack; or an electronic or electric device.

14. The thermal management system of claim 12 or 13, wherein the working fluid comprises at least 25%, at least 50%, at least 70%, at least 80%, at least 90%, at least 95%, or at least 99% by weight of the hydrofluoroether of formula (I), based on the total weight of the working fluid.

15. The thermal management system of any one of claims 12 to 14, wherein the working fluid essentially consists of the hydrofluoroether of formula (I).
